# EUROPÄISCHE PATENTSCHRIFT

(11) **EP 0 633 132 B1**
(45) Veröffentlichungstag und Bekanntmachung des Hinweises auf die Patenterteilung: **19.06.1996**
(21) Anmeldenummer: 94104750.8
(22) Anmeldetag: 25.03.1994
(51) Int. Cl.: B32B 3/06, B23P 15/00, B21C 37/29

(54) **Sandwichplatte mit verstärkten Anschlussbohrungen und Verfahren zu ihrer Herstellung**
Sandwich panel with reinforced connecting holes and method for making it
Panneau sandwich avec des trous de connexion renforcés et procédé de sa fabrication

(30) Priorität: 26.06.1993 DE 4321316
(43) Veröffentlichungstag der Anmeldung: 11.01.1995
(73) Patentinhaber: VAW Aluminium AG, D-53117 Bonn (DE)
(72) Erfinder: Bungarten, Dieter, Dipl.-Ing., D-53577 Neustadt (DE)
(74) Vertreter: Müller-Wolff, Thomas, Dipl.-Ing.

(56) Entgegenhaltungen:
- DE-A- 3 002 674
- DE-C- 4 313 826
- DE-U- 8 808 923
- US-A- 2 157 354

## Beschreibung

Die Erfindung betrifft eine Sandwichplatte, bestehend aus mindestens zwei metallischen Deckblechen 5, 7 und einer Zwischenschicht 14, die eine im wesentlichen quer zur Plattenebene verlaufende Anschlußbohrung aufweist, wobei die Bohrung einen zur Zwischenschicht hin dichten, dünnwandigen Mantelteil in Form einer Hülse 8 aufweist, sowie ein Verfahren zu ihrer Herstellung

Aus der DE 88 08 923 U 1 ist ein Verbundwerkstoff in Form von glatten und verformten Blechen bekannt, der aus zwei Aluminiumdeckschichten mit unterschiedlichen Schichtdicken und einer dazwischen angeordneten Glasfasermatte mit bestimmter Dichte, Dicke und Rückstellkraft besteht. Die Dichten, Dicken und Rückstellkräfte der verwendeten Materialien müssen so aufeinander abgestimmt sein, daß beim Verformungsvorgang des Verbundwerkstoffs das Glasflies auf 30 bis 40 % seiner Ursprungsdicke verdichtet wird. In diesem Verdichtungszustand werden die erforderlichen Umformkräfte beim Umbördeln einer separat eingebrachten Öse übertragen.

Nach Beendigung des Umformvorganges werden die Aluminiumschichten durch die Rückstellkraft des Faserflieses wieder in den ursprünglichen Abstand voneinander gebracht. Hierbei spielen die asymmetrischen Metallkaschierungen eine Rolle, die zur Folge haben, daß ein weiches Aluminiumband von der Rückstellkraft des kaltverfestigten Aluminiumdünnbandes in die richtige Position gebracht wird.

Aus dem Aluminium-Taschenbuch, 14. Auflage, Seite 818, ist es bekannt, zur Verstärkung an Krafteinleitungen und Verbindungsstellen bei Sandwichplatten Inserts aus Metall, Kunststoff oder Holz zu verwenden. Diese Inserts sollen eine Verformung der Sandwichplatte verhindern. Sie lassen sich nur in mehreren Verfahrensschritten in die Sandwichplatte einbringen. Dadurch muß zur Einhaltung von Toleranzgrenzen ein verhältnismäßig hoher Arbeitsaufwand betrieben werden.

Ohne die Verwendung von Inserts würden Sandwichplatten schon beim Bohren an den Verbindungsstellen verbiegen bzw. starke Verformungen an den Stellen der Krafteinleitung erfahren. Zusätzlich entsteht an den zur Zwischenschicht hin offenen Bohrrändern ein Abdichtungsproblem, da hier Schmutz und Feuchtigkeit in den Kernbereich der Sandwichplatte eindringen können. Insbesondere bei der Verwendung im Außenbereich bilden sich hier schnell Korrosionsschadstellen, die zur Delamination bzw. zur Zerstörung des Sandwichaufbaus führen.

Aufgabe der vorliegenden Erfindung ist es, die Anschlußmöglichkeiten bei einer Sandwichplatte der eingangs genannten Art durch Verstärkung des Randbereiches, Abdichtung des Kernbereiches bei gleichzeitig erhöhter Maßhaltigkeit zu verbessern. Ferner soll ein verhältnismäßig einfaches und zur Serienfertigung geeignetes Fertigungsverfahren zur Herstellung der verbesserten Sandwichplatten angegeben werden.

Diese Aufgabe wird erfindungsgemäß durch die in den Patentansprüchen 1 und 3 angegebenen Merkmale, sowie durch die in den abhängigen Ansprüchen 2 und 4 bis 7 angegebenen besonderen Merkmale gelöst.

Die Erfindung wird im folgenden anhand von zwei Figuren näher erläutert. Es zeigen:
- Figur 1: Vorgang einseitigen Fließbohrens von Sandwichplatten
- Figur 2: Verschließen der auskragenden Hülse durch ein Gegenwerkzeug
Die Bildfolge in Figur 1 zeigt das Einsenken des Fließbohrers 1 in eine Sandwichplatte 2, wobei zum Auffangen des Gegendruckes ein Stützblech 3 nebst Niederhalter 4 verwendet wird.

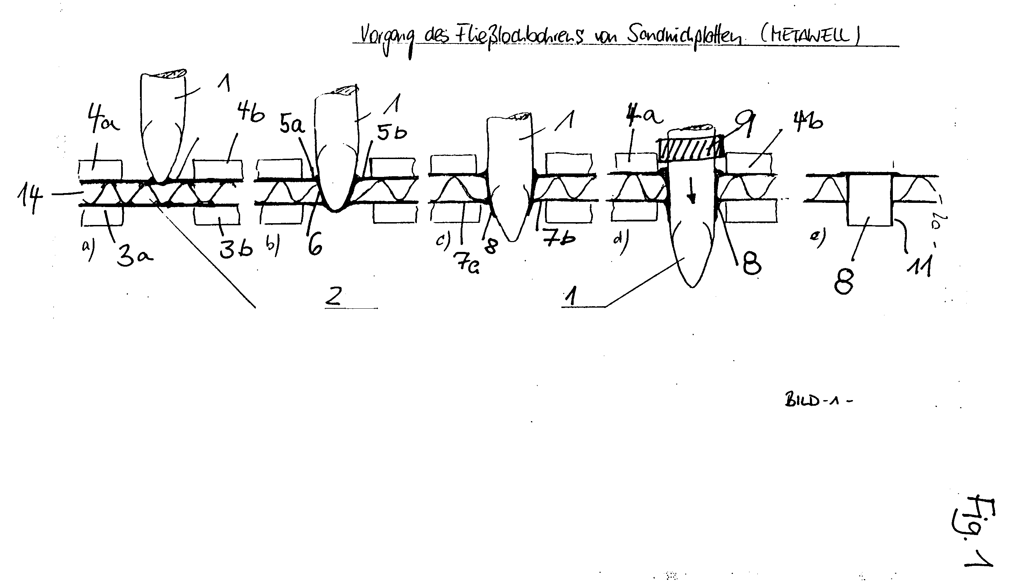

In Figur 1b ist zu erkennen, wie sich aus der Deckschicht 5a,b eine Hülse 8 bildet, die beim Durchtritt durch das Deckblech 7a,b einen kragenförmigen Ansatz 6 erhält (Figur 1c).

Im oberen Schaftbereich weist der Fließbohrer 1 einen Absatz 9 auf, der im Durchmesser vergrößert ist, jedoch zwischen die Randbegrenzung des Niederhalters 4a,b absenkbar ist. In Figur 1d wird der Fließbohrer 1 in Pfeilrichtung weiter abgesenkt, sodaß schließlich der Absatz 9 gegen den oberen Rand der Hülse 8 stößt und diesen glättet.

Nach dem Herausziehen des Fließbohrers ist die Hülse 8 von der Bearbeitungsseite her eingeebnet und geglättet (Figur 1e). Auf der gegenüberliegenden Plattenseite ist ein auskragendes Ende 11 erkennbar.

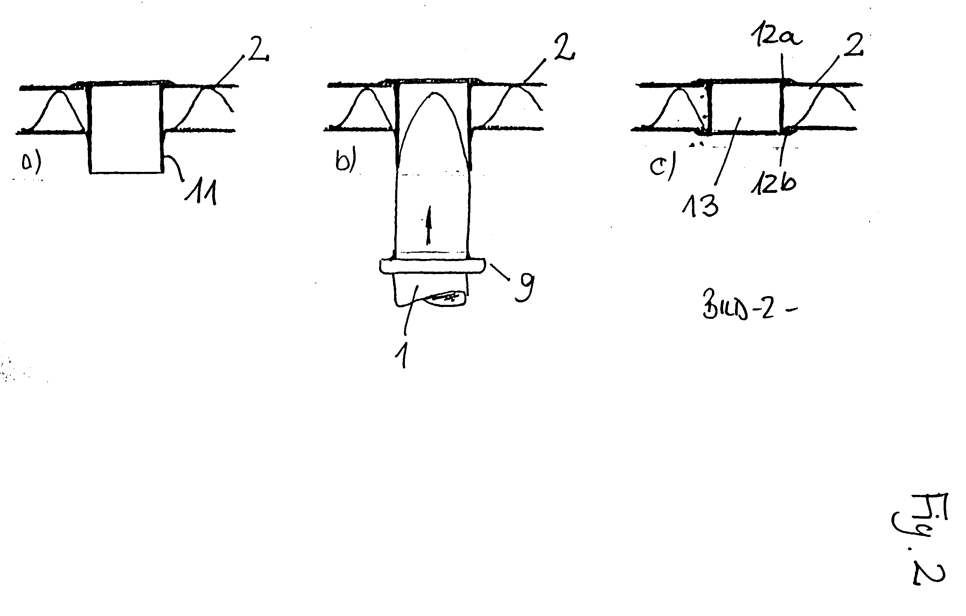

Sofern erwünscht, kann auch dieses auskragende Ende 11 in die Sandwichplattenebene eingeformt werden. Dies ist schematisch in Figur 2 dargestellt.

Figur 2a zeigt den Ausgangszustand des auskragenden Endes 11 vor der Einformung. Es ist nun möglich, durch nochmaliges Fließbohren in entgegengesetzte Richtung die Einebnung zu vollziehen. Dabei wird wiederum der Absatz 9 am zylindrischen Teil des Fließbohrers 1 gegen die auskragende Hülse 8 gedrückt. In Figur 2b ist der Verfahrensablauf durch die Pfeilrichtung angedeutet.

Nach dem Beidrücken und Verschließen des auskragenden Endes 11 ist auch auf der Unterseite der Sandwichplatte 2 ein nahezu ebener Abschluß erreicht. Um ein Optimum an Verstärkung zu erzielen, werden die Sandwichplatten in der Anschlußebene nicht vollständig geglättet, sondern es verbleibt vorteilhafterweise eine verdickte Randzone 12a,b an der Ober- und Unterseite der Sandwichplatte. So erhält man einen nahezu dichten Abschluß zwischen den Platten und dem Sandwichkern innerhalb des Durchzuges 13.

Bei geeigneter Werkstoffauswahl können durch den Fließbohrvorgang das Material des Ober- und Unterbleches an der Anschlußstelle verfestigt werden. Vorteilhafterweise geschieht dies auch im Bereich des Durchzugs 13, um den Einfluß der Kerbwirkung durch scharfkantige Gewindeteile gering zu halten. Dies ist insbesondere bei dünnen Blechen in den Abmessungen von 0,2 - 0,8 mm mit besonderem Vorteil anwendbar.

Weitere Vorteile der erfindungsgemäßen Sandwichplatte ergeben sich durch die geringen Fertigungskosten sowie die hohe Maßhaltigkeit und Belastbarkeit des hergestellten Produktes. Fehlüberdeckungen von Durchgangs- und Einschraublöchern entfallen, da die zu verbindenden Teile direkt auf Endmaß gebohrt werden können. Ein Vorbohren ist nicht erforderlich.

Bei vielen Verbindungsverfahren entsteht ein erheblicher Späneanfall bzw. ein Materialverlust durch Verschnitt oder unvermeidliche Verformungen. Beim erfindungsgemäßen Verfahren fällt kein Materialabfall an. Das eingesetzte Material wird durch eine geschickte Umformung zur Verstärkung an der Verbindungsstelle herangezogen. Dadurch entsteht beim Verspannen bzw. beim Verschrauben mit anderen Bauteilen eine wesentlich höhere Steifigkeit von mindestens 10 %, im Fall von Al- zu Mg-Legierungen auch von 30 % und höher bei einer geringeren Verformung z.B. durch Einbeulen der Platten.

## Patentansprüche

1. Sandwichplatte, bestehend aus mindestens zwei metallischen Deckblechen (5, 7) und einer Zwischenschicht (14), die eine im wesentlichen quer zur Plattenebene verlaufende Anschlußbohrung aufweist, wobei die Bohrung einen zur Zwischenschicht hin dichten, dünnwandigen Mantelteil in Form einer Hülse (8) aufweist,
dadurch gekennzeichnet,
daß die aus den Deckblechen (5, 7) gebildete Hülse (8) nahtlos in die Deckbleche (5, 7) der Sandwichplatte (2) übergeht, wobei die Deckbleche und die Hülse der Anschlußbohrung ein einheitliches Werksstück bilden.

2. Sandwichplatte nach Anspruch 1,
dadurch gekennzeichnet,
daß die Deckbleche (5, 7) der Sandwichplatte (2) aus einem aushärtbaren Aluminiumwerkstoff bestehen, dessen Gefügestruktur im Bereich der Hülse (8) der Anschlußbohrung im verfestigten Zustand vorliegt.

3. Verfahren zur Ausbildung von Anschlußbohrungen in einer Sandwichplatte, die aus mindestens zwei metallischen Deckblechen (5, 7) und einer Zwischenschicht (14) besteht, wobei die Anschlußbohrungen im wesentlichen quer zur Plattenebene verlaufen,
dadurch gekennzeichnet,
daß die Anschlußbohrungen von einer Plattenseite aus in die Sandwichplatte fließgebohrt werden, wobei sich im Umfangsbereich jeder Anschlußbohrung eine Hülse (8) aus den Deckblechen (5, 7) bildet, die zur Zwischenschicht (14) der Sandwichplatte (2) hin die Anschlußbohrung dichtend schließt.

4. Verfahren nach Anspruch 3,
dadurch gekennzeichnet,
daß die Hülse (8) einen über das Deckblech (7) hinausreichenden Kragen (11) bildet, der mit einem geeigneten Umformwerkzeug geglättet wird.

5. Verfahren nach einem der vorhergehenden Ansprüche,
dadurch gekennzeichnet,
daß das Umformwerkzeug aus einem Fließbohrer mit einem im Durchmesser vergrößerten Absatz (9) besteht, der nach der Ausbildung der Hülse (8) von der anderen Plattenseite her in die Anschlußbohrung eingeführt und mit dem Absatz (9) gegen den Kragen (11) der Hülse (8) gedrückt wird.

6. Verfahren nach einem der vorhergehenden Ansprüche,
dadurch gekennzeichnet,
daß beim Fließbohren die Sandwichplatte (2) auf der dem Fließbohrer (1) gegenüberliegenden Plattenseite abgestützt wird.

7. Verfahren nach einem der vorhergehenden Ansprüche,
dadurch gekennzeichnet,
daß die Abstützung der Sandwichplatte durch ein die Anschlußbohrung allseitig umgebendes Stützblech (3a,b) erfolgt, das mit einer an der Plattenoberseite angeordneten Niederhaltervorrichtung (4a,b) in Verbindung steht.

## Claims

1. A sandwich plate consisting of at least two metallic cover plates (5, 7) and an intermediate layer (14) which comprises a connecting bore extending substantially transversely to the plate plane, with the bore comprising a thin-walled jacket part in the form of a sleeve (8) which is sealed towards the intermediate layer,
characterised in
that the sleeve (8) formed out of the cover plates (5, 7) passes seamlessly into the cover plates (5, 7) of the sandwich plate (2), with the cover plates and the sleeve of the connecting bore forming a uniform workpiece.

2. A sandwich plate according to claim 1,
characterised in
that the cover plates (5, 7) of the sandwich plate (2) consist of an age-hardenable aluminium material whose structure in the region of the sleeve (8) of the connecting bore is present in the strengthened condition.

3. A method of forming connecting bores in a sandwich plate consisting of at least two metallic cover plates (5, 7) and an intermediate layer (14), with the connecting bores extending substantially transversely to the plate plane,
characterised in
that the connecting bores are flow-drilled into the sandwich plate from one plate end and that, in the circumferential region of each connecting bore, a sleeve (8) is formed out of the cover plates (5, 7), which sleeve (8) sealingly closes the connecting bore towards the intermediate layer (14) of the sandwich plate (2).

4. A method according to claim 3,
characterised in
that the sleeve (8) forms a collar (11) which extends beyond the cover plate (7) and which is smoothed by a suitable forming tool.

5. A method according to any one of the preceding claims, characterised in
that the forming tool consists of a flow-drill which comprises a step (9) with an increased diameter and which, after the sleeve (8) has been formed, is introduced from the other plate end into the connecting bore and is pressed by means of the step (9) against the collar (11) of the sleeve (8).

6. A method according to any one of the preceding claims, characterised in
that, during the flow-drilling operation, the sandwich plate (2) is supported at the plate end opposed to the flow drill (1).

7. A method according to any one of the preceding claims, characterised in
that the sandwich plate is supported by a supporting plate (3a, b) which surrounds the connecting bore on all sides and which is connected to a holding-down device (4a, b) arranged on the upper face of the plate.

## Revendications

1. Panneau à structure sandwich, constitué d'au moins deux tôles métalliques de recouvrement (5, 7) et d'une couche intercalaire (14) munie d'un trou de rattachement s'étendant, pour l'essentiel, transversalement par rapport au plan du panneau, le trou présentant une partie d'enveloppe à paroi mince, étanche en direction de la couche intercalaire et revêtant la forme d'une douille (8),
caractérisé par le fait
que la douille (8) formée à partir des tôles de recouvrement (5, 7) fusionne, sans aucun joint, dans les tôles de recouvrement (5, 7) du panneau (2) à structure sandwich, les tôles de recouvrement et la douille du trou de rattachement formant une pièce unitaire.

2. Panneau à structure sandwich selon la revendication 1,
caractérisé par le fait
que les tôles de recouvrement (5, 7) dudit panneau (2) à structure sandwich consistent en un matériau durcissable à base d'aluminium, dont la texture se présente à l'état consolidé dans la région de la douille (8) du trou de rattachement.

3. Procédé pour pratiquer des trous de rattachement dans un panneau à structure sandwich constitué d'au moins deux tôles métalliques de recouvrement (5, 7) et d'une couche intercalaire (14), les trous de rattachement s'étendant, pour l'essentiel, transversalement par rapport au plan du panneau,
caractérisé par le fait
que les trous de rattachement sont forés en continu dans le panneau à structure sandwich, à partir d'un côté dudit panneau, avec formation dans la zone périphérique de chaque trou de rattachement, à partir des tôles de recouvrement (5, 7), d'une douille (8) qui provoque l'obturation étanche du trou de rattachement en direction de la couche intercalaire (14) du panneau (2) à structure sandwich.

4. Procédé selon la revendication 3,
caractérisé par le fait
que la douille (8) forme un collet (11) qui fait saillie au-delà de la tôle de recouvrement (7) et est aplani à l'aide d'un outil de déformation approprié.

5. Procédé selon l'une des revendications précédentes,
caractérisé par le fait
que l'outil de déformation est constitué d'une perceuse en continu qui est dotée d'un épaulement (9) de diamètre agrandi, est insérée dans le trou de rattachement à partir de l'autre côté du panneau, après le façonnage de la douille (8), et est pressée par l'épaulement (9) contre le collet (11) de la douille (8).

6. Procédé selon l'une des revendications précédentes,
caractérisé par le fait
que, lors du percement en continu, un appui est offert au panneau (2) à structure sandwich du côté dudit panneau qui est tourné à l'opposé de la perceuse en continu (1).

7. Procédé selon l'une des revendications précédentes,
caractérisé par le fait
que l'appui du panneau à structure sandwich est assuré par l'intermédiaire d'une tôle d'appui (3a, b) qui entoure périphériquement le trou de rattachement, et est reliée à un dispositif serre-flans (4a, b) placé à la face supérieure du panneau.
